# EUROPEAN PATENT APPLICATION

(11) **EP 2 523 289 A1**
(43) Date of publication of application: **14.11.2012**
(21) Application number: 11165515.5
(22) Date of filing: 10.05.2011
(51) Int. Cl.: H02G 15/06, H02G 15/113, E05B 11/04, E05B 63/18, E05C 9/04, G02B 6/44

(54) **Locking system for enclosures**

(71) Applicant: Tyco Electronics Raychem BVBA, 3010 Kessel-Lo (BE)
(72) Inventor: Verheyden, Danny, 3200, Gelrode (BE); Bryon, Roel Modest Willy, 3200, Aarschot (BE); Vastmans, Kristof, 3370, Boutersen (BE); Van Genechten, Geert, 2290, Vorselaar (BE)
(74) Representative: Obst, Bernhard

(57) **Abstract**

A locking system for an enclosure (10) wherein the enclosure (10) includes a base (12) and a moveable cover (14). The cover (14) is moveable only when a key operated slide (70) is moved by a key (26) inserted into a key slot (24). Once the cover (14) is moved, the key (26) cannot be removed from the key slot (24) until the cover (14) is returned to the closed positioned. A moveable latch (50) holds the cover (14) to the base (12). The key operated slide (70) selectively connects and disconnects from the latch (50) to allow the cover (14) to be moved. The latch (50) cooperates with a clip (94) on the slide (70) which allows the slide (70) to return to the locked position to allow the key (26) to be removed from the key slot (24) only when the cover (14) and the latch (50) are closed. One or two latches can be provided with a corresponding number of key operated slides (70). The key (26) is rotatable to move the slide (70) from an extended and locked position to a retracted and unlocked position. (FIG. 3)

## Description

### Field of the Invention

The present invention relates to systems and methods for locking telecommunications enclosures.

### Background of the Invention

Enclosures are known for managing telecommunications cables and connectivity equipment, including splices, splitters, wave division multiplexers and termination. The enclosures may be mounted outside and include movable covers for accessing an interior of the enclosures. There is a need for maintaining the covers in the closed positions. There is also a need for providing limited access to the interiors, such as with a security feature.

### Summary of the Invention

The present invention concerns a locking system for an enclosure wherein the enclosure includes a base, and a moveable cover. The cover is moveable only when a key operated lock is moved by a key inserted into a key hole and rotated to operate the lock. Once the cover is moved, the key cannot be turned and/or removed from the key slot until the cover is returned to the closed position.

In one embodiment, a moveable slide operated by the key holds the cover to the base.

In one embodiment, the moveable slide moves between an extended and locked position to a retracted and unlocked position.

In a further embodiment, a moveable latch holds the cover to the base in the closed position. The key operated slide selectively connects and disconnects from the latch to allow the cover to be moved.

In one embodiment, the latch operates a clip or latching element on the key operated slide which allows the slide to return to the locked position to allow the key to be turned and removed from the key slot only when the cover and the latch are in the closed positions.

In one embodiment, two latches are provided on opposite sides of the enclosure, and two key operated slides are provided, one for cooperating with each latch.

The invention also relates to a lock operated by a rotatable key, wherein the lock includes a moveable member moved by the key. The key cannot be removed or rotated back to a locked condition until a moveable clip of the lock is moved to allow movement of the moveable member.

The invention also relates to a method of using a lock of an enclosure, wherein a key is rotated to move a moveable member allowing a cover to be moved relative to a base to access an interior of the enclosure. The key cannot be removed or rotated back to a locked condition until the cover is closed.

In one preferred method, the lock includes a moveable slide moveable from an extended position to a retracted position to unlock the cover.

In one preferred method, the moveable slide includes a clip which latches the slide in the retracted position. The clip is moveable by engagement with the cover, or a moveable latch which holds the cover, when the cover and/or latch are in the closed position; to allow the lock to be returned to the locked condition and the key to be removed.

### Brief Description of the Figures

FIG. 1 is a perspective view of a telecommunications enclosure in accordance with one embodiment of the invention, in the closed position;
FIG. 2 is a perspective view of the enclosure of FIG. 1, showing the cover in the open position, with end portions removed;
FIG. 3 is a perspective view of the enclosure of FIG. 1, showing the key inserted into the key hole;
FIG. 4 is a perspective view of the enclosure of FIG. 3, showing the key turned 90 degrees to unlock the lock;
FIG. 5 is a top view of the enclosure of FIG. 3;
FIG. 6 is a cross-sectional view of the enclosure of FIG. 5 along lines 6-6
FIG. 7 is an enlarged view of a portion of the cross-sectional view of FIG. 6;
FIG. 8 is a top view of the enclosure of FIG. 4;
FIG. 9 is a cross-sectional view of the enclosure of FIG. 8 along lines 9-9;
FIG. 10 is an enlarged view of a portion of the cross-sectional view of FIG. 9;
FIG. 11 is a top view of the enclosure of FIG. 4, showing one of the latches in the open position;
FIG. 12 is a cross-sectional view of the enclosure of FIG. 11 along lines 12-12;
FIG. 13 is an enlarged view of a portion of the cross-sectional view of FIG. 12;
FIG. 14 is a top view of the enclosure of FIG. 4, showing both latches in the open position;
FIG. 15 is a cross-sectional view of the enclosure of FIG. 14 along lines 15-15;
FIG. 16 is an enlarged view of a portion of the cross-sectional view of FIG. 15;
FIG. 17 is a perspective view of one of the slides of the lock;
FIG. 18 is a top view of the slide of FIG. 17;
FIG. 19 is a cross-sectional view of the slide of FIG. 18 along lines 19-19;
FIG. 20 is a perspective view of a portion of the enclosure of FIG. 3, with portions removed to illustrate the lock;
FIG. 21 is a top view of the view of the enclosure of FIG. 20;
FIG. 22 is a perspective view of a portion of the enclosure of FIG. 4, with portions removed to illustrate the lock;
FIG. 23 is a top view of the view of the enclosure of FIG. 22.

### Detailed Description of the Preferred Embodiments

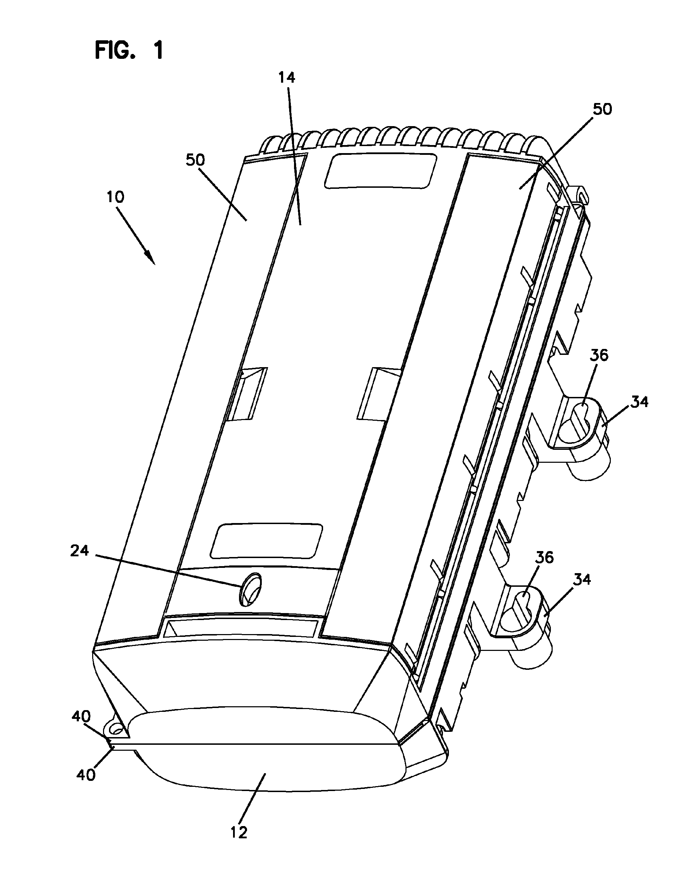

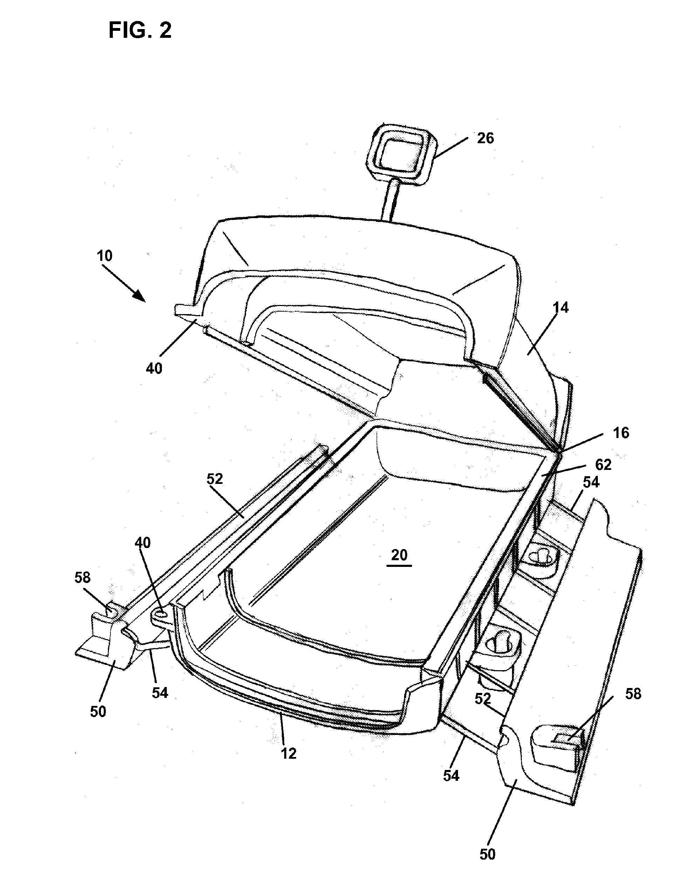

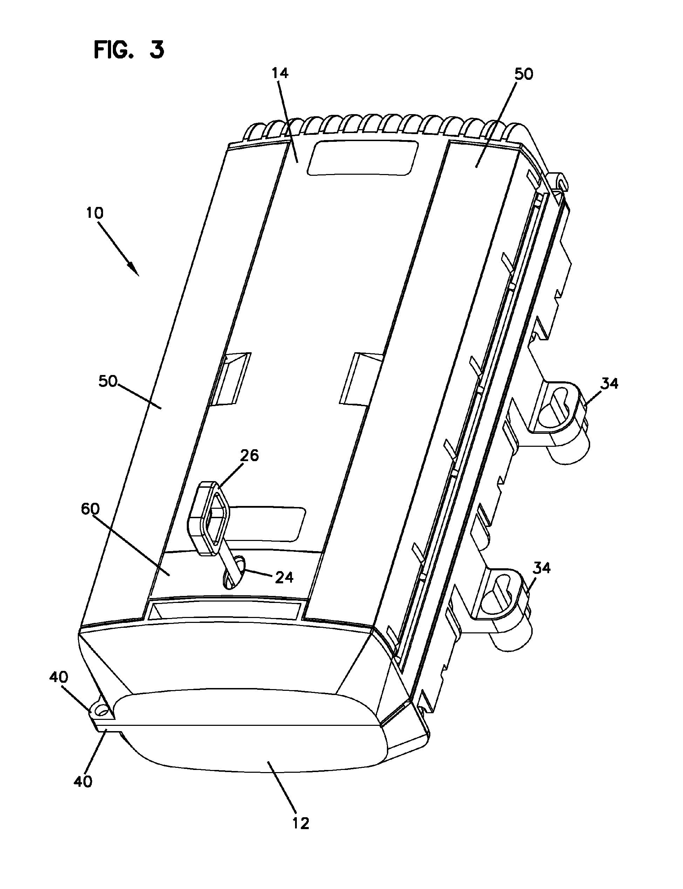

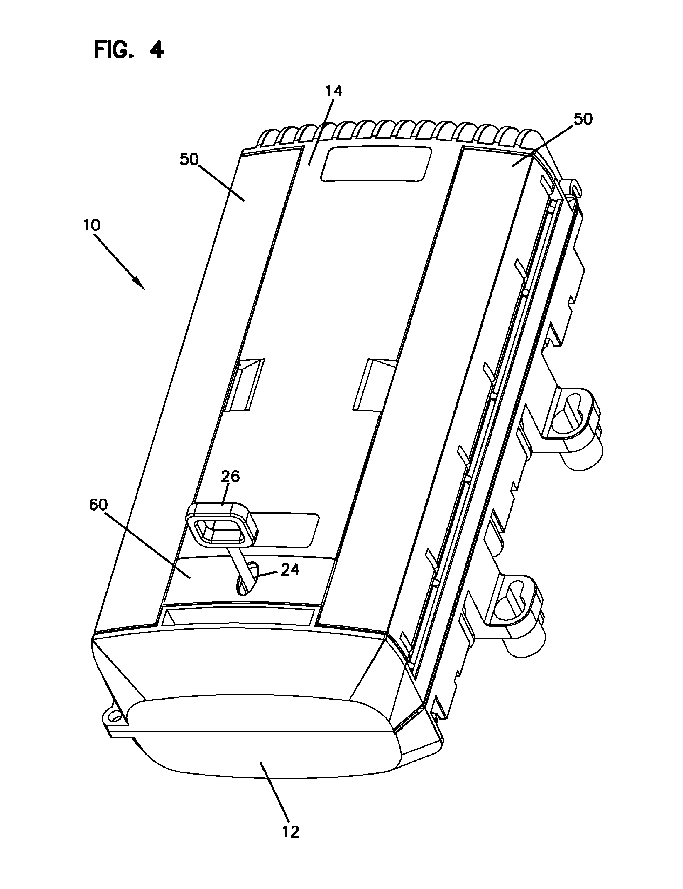

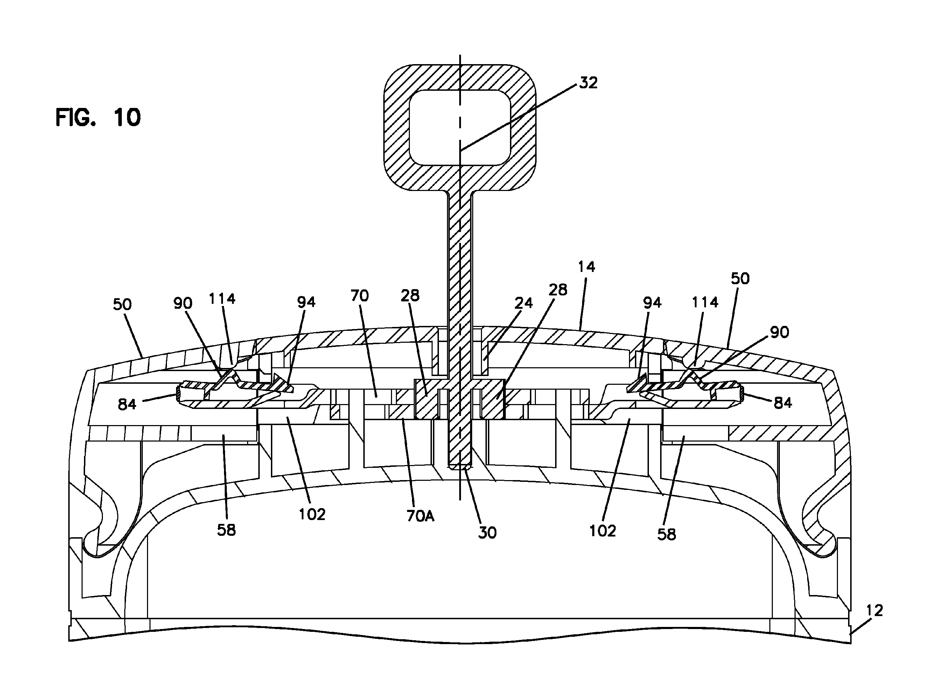

Referring now to FIGS. 1-4, a telecommunications enclosure 10 is shown including a base 12, and a moveable cover 14. In one embodiment, base 12 is the bottom element, and cover 14 is the top element. Cover 14 is hinged at a hinge 16 to expose an interior 20 for holding telecommunications cables and connectivity equipment, including splices, splitters, wave division multiplexers, and terminations. Cover 14 includes a key hole 24 related to an interior lock 60 that will be described in greater detail below. Key hole 24 has an elongated shape. A key 26 has an end 30 (see FIG. 10) which operates the lock 60 through rotating movement. Key 26 can only be inserted and removed in certain orientations relative to key hole 24.

Base 12 includes tabs 34 with holes 36 for mounting enclosure 10 to a pole or wall structure. Base 12 and cover 14 each include an eyelet 40 for use with a security tie or lock for additional security in addition to lock 60 if desired.

Enclosure 10 includes latches 50 which are moveable relative to base 12 and cover 14 to allow cover 14 to rotate or move relative to base 12. Latches 50 extend generally the full length of enclosure 10 in the longitudinal direction. Latches 50 include hooks 52 which are received in slots 38 of cover 14. Flexible elements 54 connect latches 50 to base 12.

Lock 60 releaseably closes latches 50 and cover 14 to base 12. Lock 60 engages sockets 58 on latches 50 to retain latches 50 in the position shown in FIG. 1 to maintain enclosure 10 in the closed condition. In one preferred embodiment, a water tight seal 62 is positioned between base 12 and cover 14.

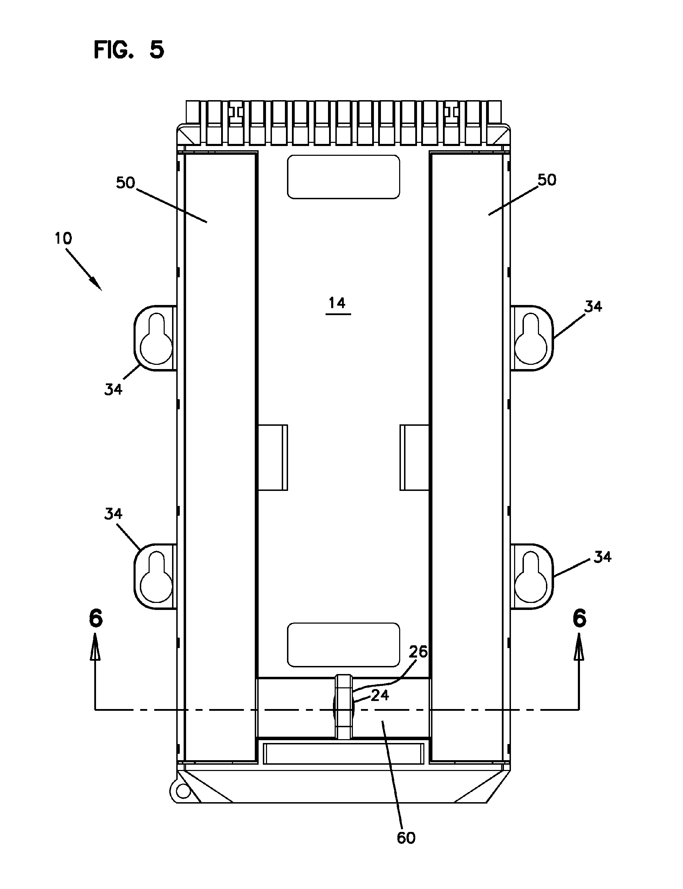

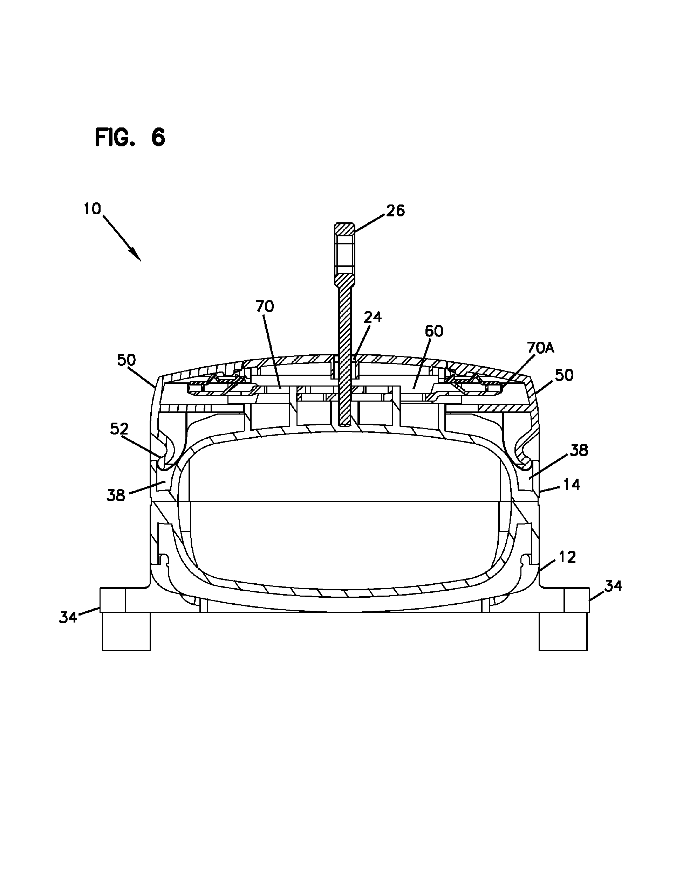

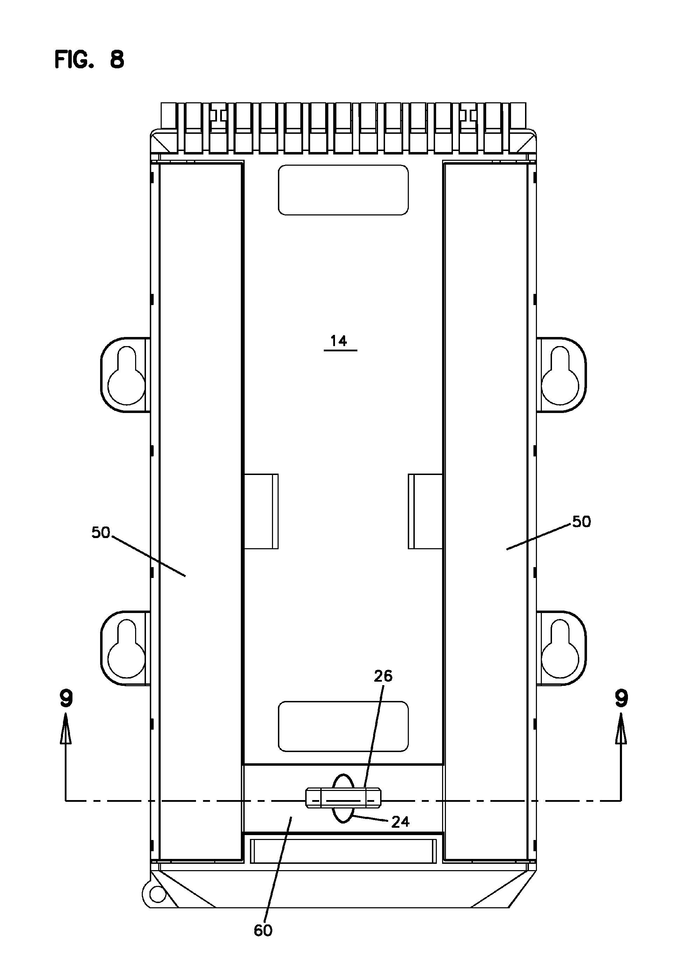

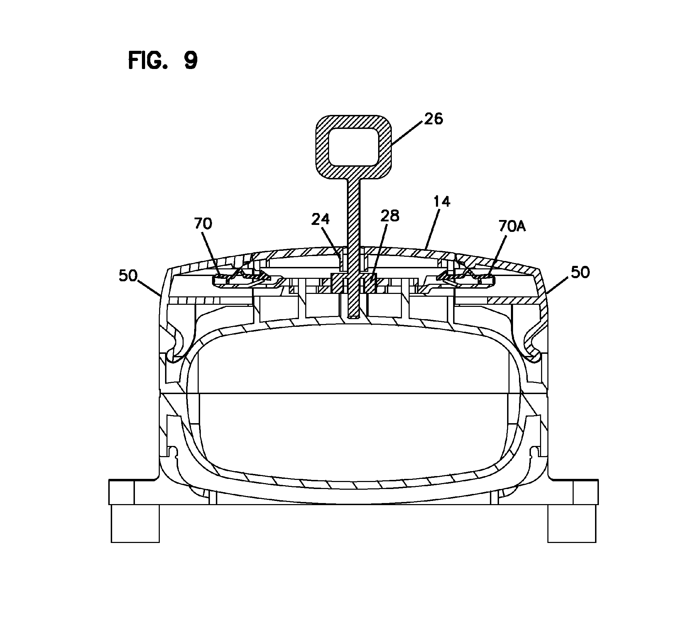

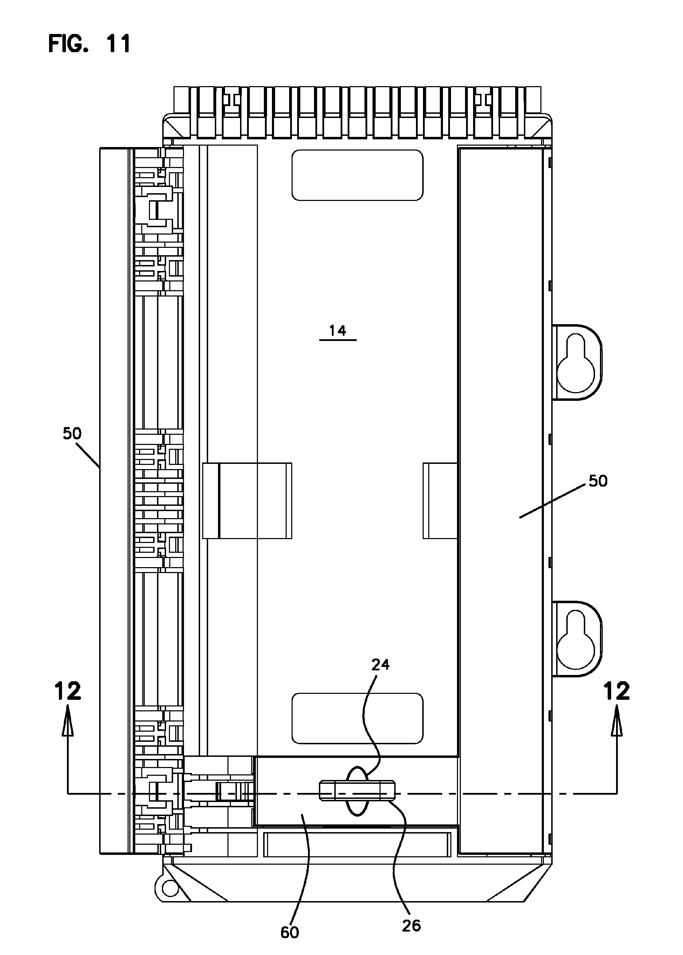

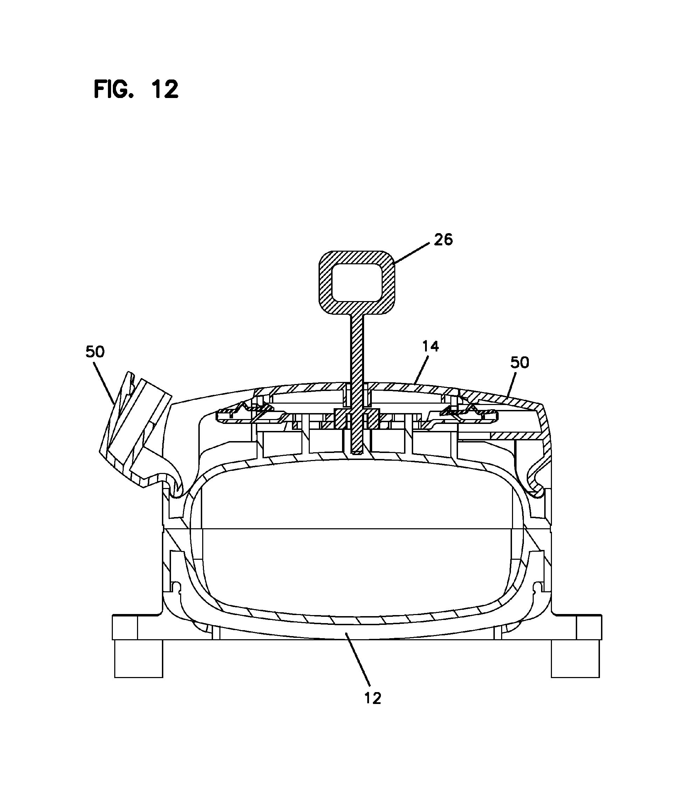

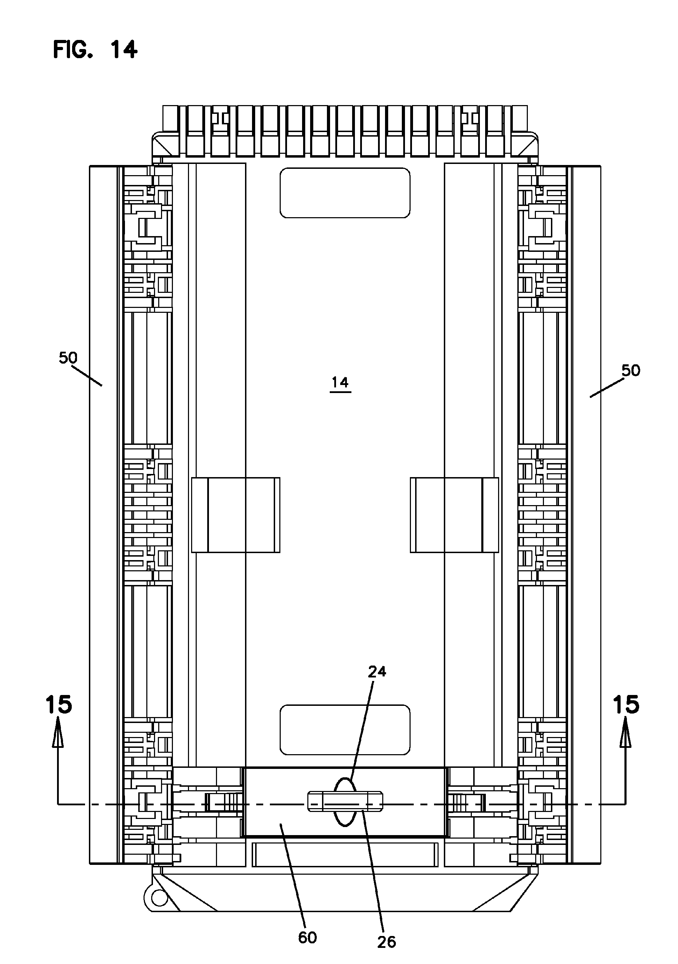

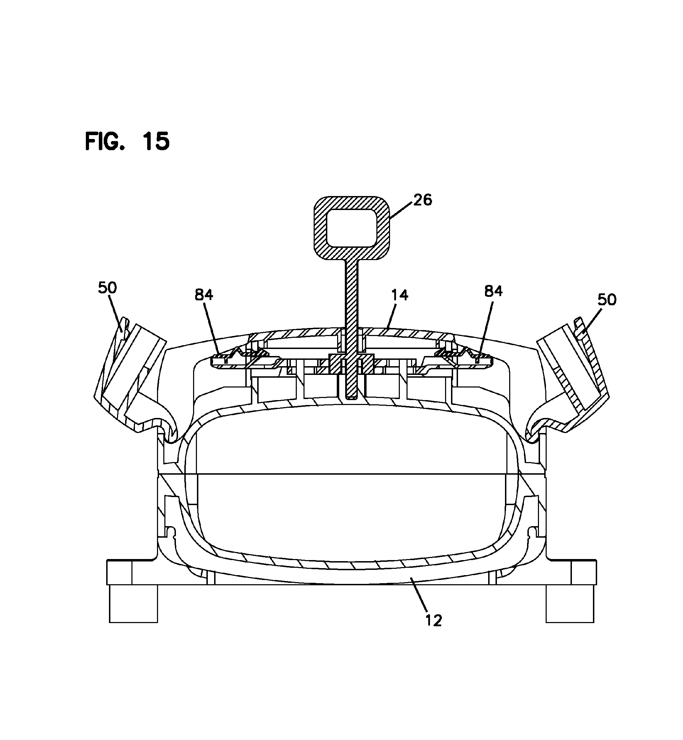

Referring now to FIGS. 5-23, lock 60 will be described in greater detail. Lock 60 includes at least one moveable slide 70. In the illustrated embodiment, two slides 70, 70A are provided. Slide 70A is similarly constructed to slide 70. Each slide 70, 70A cooperates with one of the two latches 50 by engaging and disengaging the respective socket 58 on each latch 50. As shown in FIG. 10, key 26 includes lever arms 28 on end 30. Rotation of key 26 about axis 32 causes movement of slides 70 between extended (closed) and retracted (open) positions.

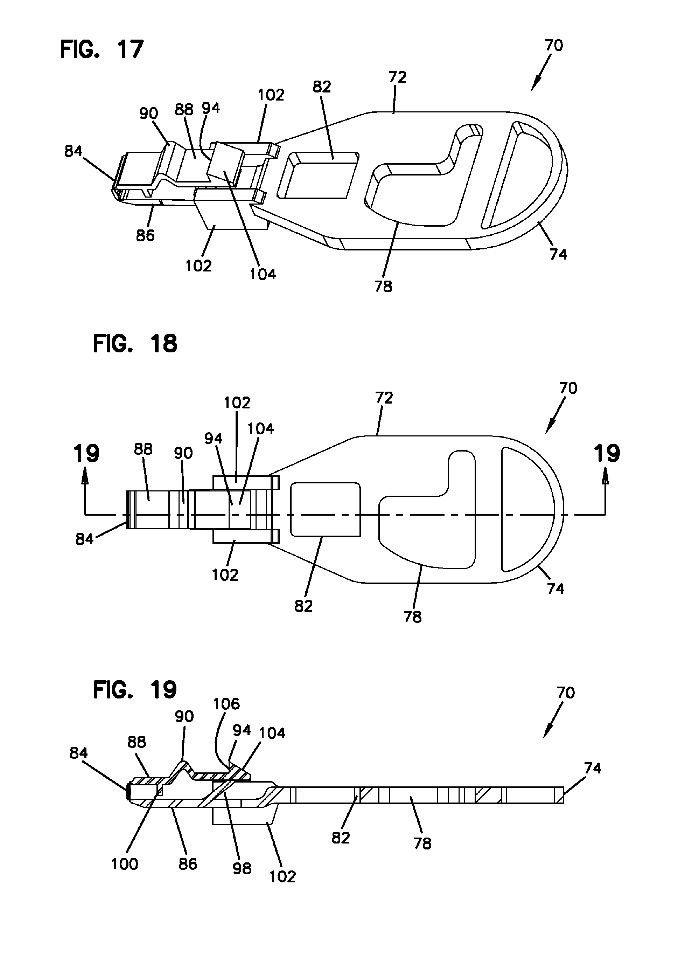

Referring now to FIGS. 17-19, slide 70 includes a body 72 including a spring 74 formed by a flexible strip, a cam opening 78 for receipt of the key 26, and a spring post opening 82. A latch end 84 of slide 70 includes a base 86 and a flexible tab 88. Flexible tab 88 includes an upper bump 90, and a distal snap or clip 94. Clip 94 includes a ramp 104, and a shoulder 106. Base 86 includes a spring arm 98. Tab 88 includes a lower stop 100. Body 72 of slide 70 also includes two side lock plates 102 which cooperate with sockets 58 of latches 50 to hold latches 50 in the closed positions. Slide 70A is similarly constructed, to operate in the opposite direction. Slides 70, 70A operate simultaneously.

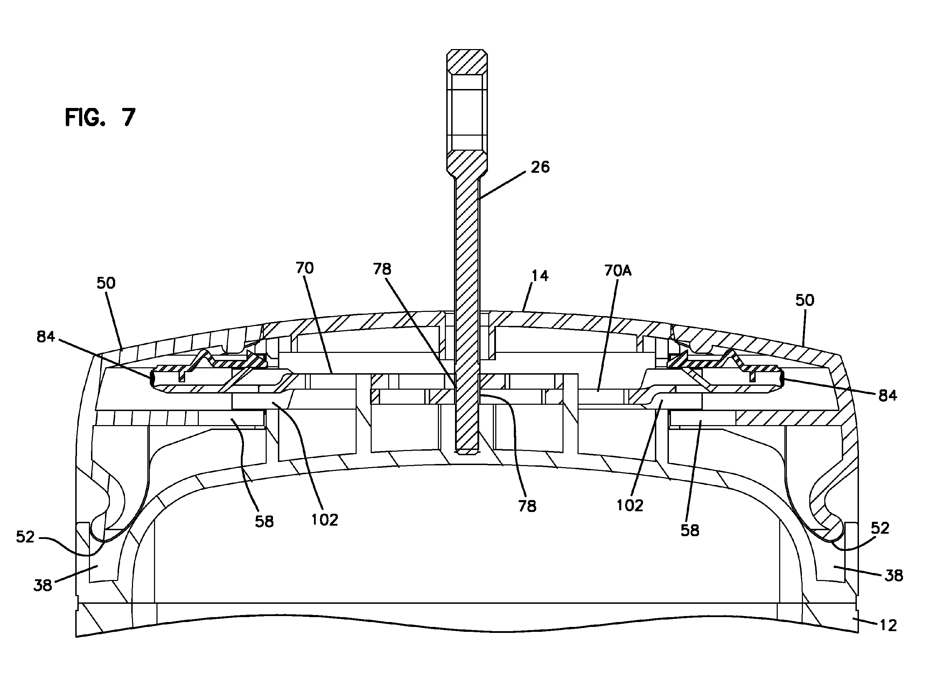

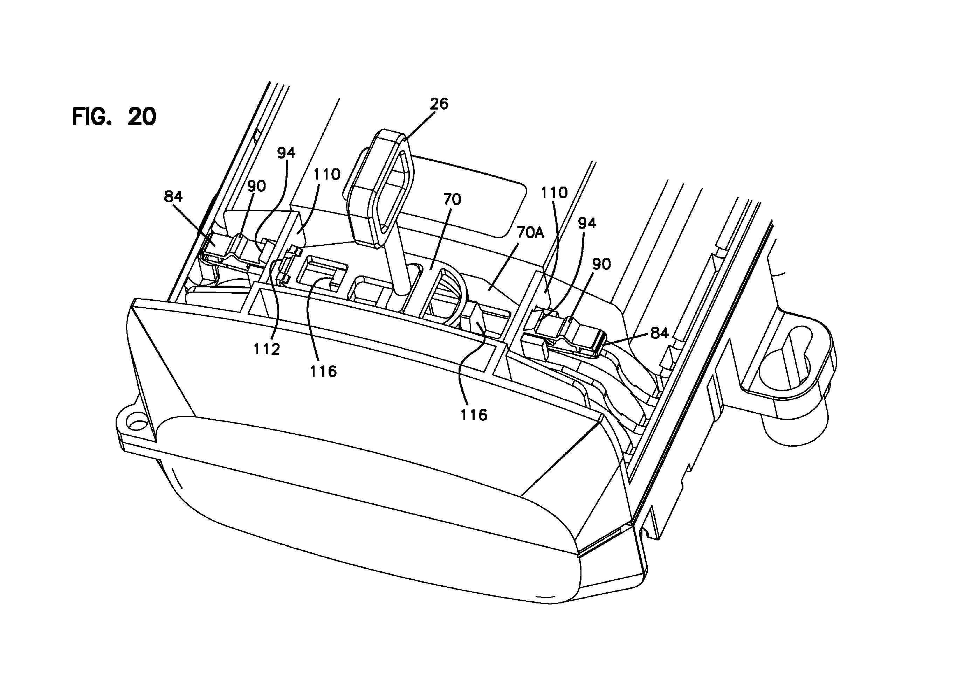

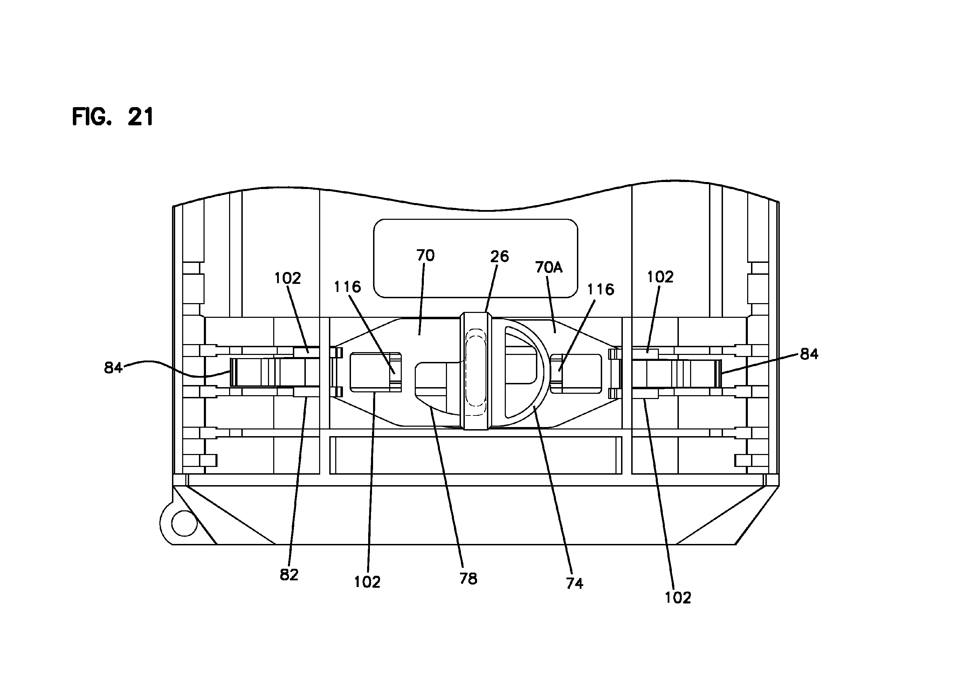

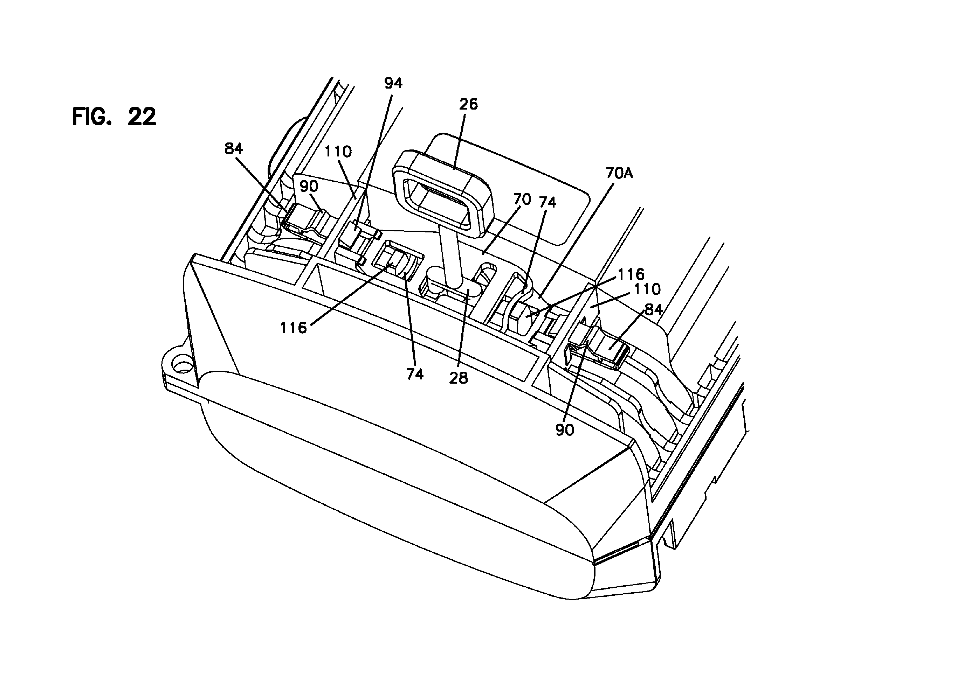

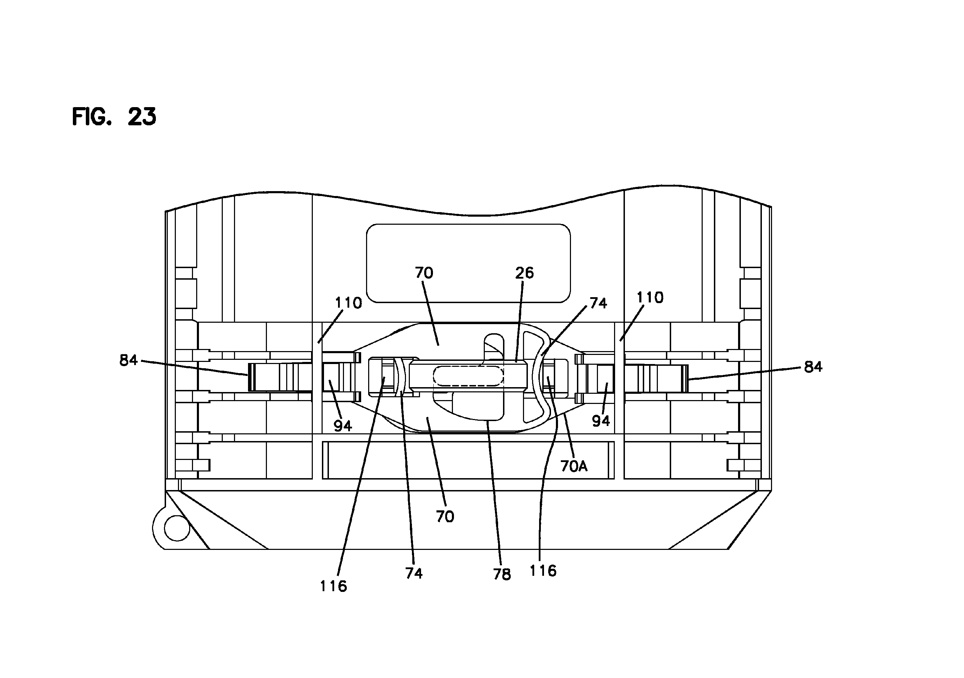

Referring now to FIGS. 7, 10, 13, 16, and 20-23, upper slide 70 is positioned above lower slide 70A in overlapping relation. When key is turned 90 degrees clockwise from the position shown in FIGS. 20 and 21 to the position shown in FIGS. 22 and 23, lever arms 28 engage cam openings 78 to retract or pull latch ends 84 inwardly. Such movement causes lock plates 102 to disengage from sockets 58. Compare FIGS. 7 and 10.

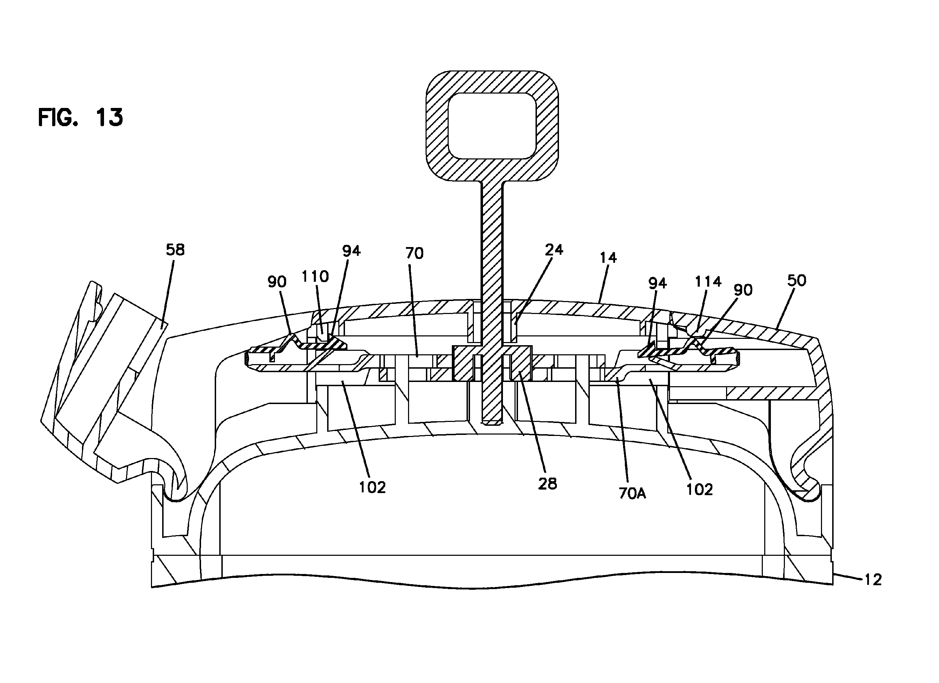

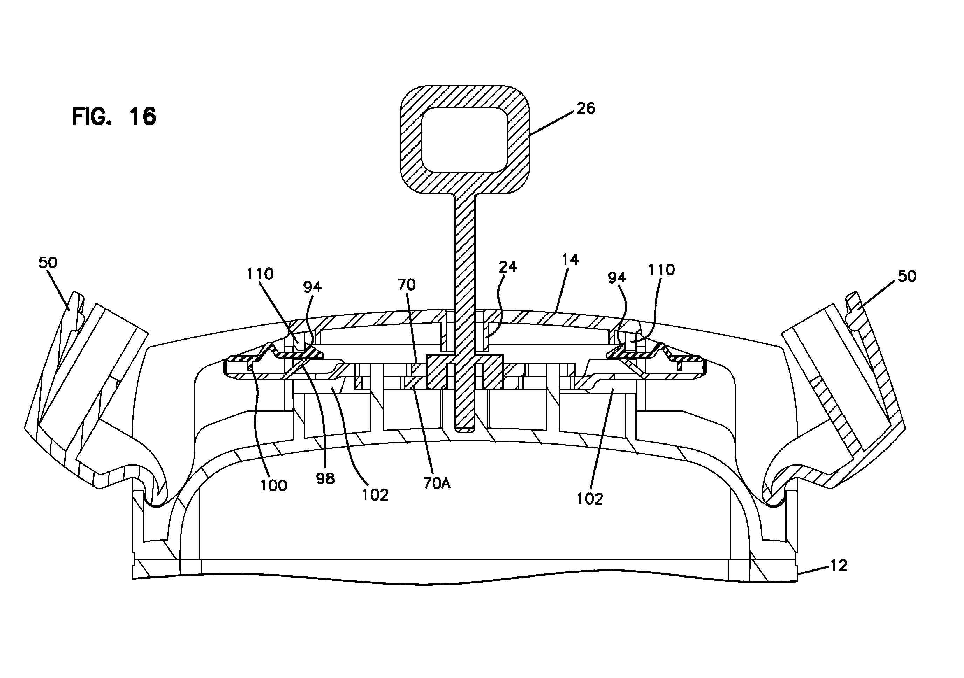

In the position of FIG. 22, ramps 104 of clips 94 slide through openings 112 in plate portions 110. Once latches 50 are lifted, the shoulders 106 are retained by plate portions 110 so that key 26 cannot be rotated from the position of FIG. 22 to the position of FIG. 20. See FIGS. 13 and 16. When the latches 50 are in the open position, slides 70, 70A cannot be moved from the retracted positions to the extended positions. Once the latches 50 are closed, bumps 114 on latches 50 engage bumps 90 on slides 70, 70A to push clips 94 downwardly so that clips 94 can clear the openings 112 in plate portions 110 allowing key 26 to be rotated back to the locked position, and moving slides 70, 70A from the retracted positions to the extended positions.

Spring arm 98 biases tab 88 upwardly. Stop 100 limits the amount of travel of tab 88 downwardly. Spring post 116 provides a stop surface for engagement by spring 74 of each slide 70A, 70B, respectively.

As shown in FIGS. 10, 13 and 16, lever arms 28 of key 26 are wider than key hole 24, preventing key 26 from being removed from lock 60 unless both latches 50 are closed, and both slides 70, 70A are pushed outwardly to the extended positions.

As described, a rotatable key 26 is used with a lock 60 to open an enclosure 10 through rotational movement, and the key 26 cannot be removed and/or rotated back until the enclosure is closed again. Such a system prevents an operator from leaving an enclosure open exposed to the elements or to unauthorized persons from later accessing the internal contents of the enclosure.

One further feature to include for tracking of the operator's use of key 26 is to add RFID (Radio Frequency Identification) technology to key 26 and lock 60 which can record times, dates, and which enclosures 10 were accessed by the operator during the working shift or shifts. The key 26 will retain the usage data, and can be turned in at a reporting station to record and download the usage data.

### Parts List

- 10: Enclosure
- 12: Base (bottom)
- 14: Cover (top)
- 16: Hinge
- 20: Interior
- 24: Key hole
- 26: Key
- 28: Lever arms
- 30: Shaft end
- 32: Axis
- 34: Tabs
- 36: Holes
- 38: Slots
- 40: Eyelets
- 50: Latches
- 52: Hooks
- 54: Flexible elements
- 58: Sockets
- 60: Lock
- 62: Seal
- 70: Slide
- 70A: Bottom slide
- 72: Body
- 74: Spring
- 78: Cam opening
- 82: Opening for spring tab
- 84: Latch end
- 86: Base
- 88: Tab
- 90: Bump
- 94: Clip (snap)
- 98: Spring arm
- 100: Stop
- 102: Lock plate
- 104: Ramp
- 106: Shoulder
- 110: Plate portion
- 112: Opening
- 114: Bump
- 116: Spring post

## Claims

1. A telecommunications enclosure (10) comprising:
a base (12);
a moveable cover (14), wherein the base (12) and the cover (14) define an enclosed interior (20), wherein the cover (14) is moveable to access the interior (20);
a lock (60) for receiving a rotatable key (26) for locking the enclosure (10) closed;
**characterized in that**:
the lock (60) includes a slide (70) operated by the key (26) and moveable between an extended position and a retracted position;
wherein in the extended position the cover (14) is locked to the base (12), and wherein in the retracted position the cover (14) is moveable relative to the base (12);
wherein the slide (70) cannot be moved from the retracted position to the extended position until the cover (14) is in the closed position relative to the base (12), and wherein the key (26) cannot be removed from the lock (60) when the slide (70) is in the retracted position.

2. The telecommunications enclosure of claim 1, further comprising a latch (50) which is moveable relative to the base (14) and the cover (12), wherein the slide (70) engages the latch (50) to hold the latch (50) in a closed position which holds the cover (12) in the closed position relative to the base (14).

3. The telecommunication enclosure of claim 2, wherein two latches (50) are provided on opposite sides of the cover (14), and two slides (70, 70A) are provided with the lock (60), wherein the key (26) operates both slides (70, 70A) simultaneously.

4. The telecommunication enclosure of claims 1-3, wherein each slide (70, 70A) includes a body (72) including a spring (74), a cam opening (78).

5. The telecommunications enclosure of claim4, wherein each slide (70, 70A) includes an opening (82) for a spring post (116) of the cover (14).

6. The telecommunications enclosure of claims 1-5, wherein each slide (70, 70A) includes a clip (94) for retaining the slide (70, 70A) in the retracted position as long as the cover (14) is in the open position.

7. The telecommunications enclosure of claims 2-6, wherein each slide (70, 70A) includes a latch end (84) including a base (86), and a moveable tab (88) which holds each slide (70, 70A) in the retracted position when the cover (14) and/or the latches (50) are in the open positions.

8. The telecommunications enclosure of claim 7, wherein the tab (88) includes a bump (90), and a clip (94) with a ramp (104) and a shoulder (106), wherein the base (86) includes a spring arm (98), wherein the tab (88) includes a stop (100), and wherein the cover (14) includes a plate portion (110) with an opening (112) for engagement with the shoulder (106) in the retracted position, wherein the latch (50) includes a socket (58) and a bump (114), wherein each slide (70, 70A) includes a locking plate (102) engageable with the socket (58) of the latch (50) to hold the latch (50) in the closed position in the extended position, wherein the bump (114) of the latch (50) moves the clip (94) of the tab (88) of the slide (70, 70A) to allow the slide (70, 70A) to move from the retracted position to the extended position.

9. A lock (60) for use in the enclosure (10) of claims 1-8, the lock (60) including a slide (70) operated by a rotatable key (26) and moveable between an extended position and a retracted position;
wherein in the extended position the cover (14) is locked to the base (12), and wherein in the retracted position the cover (14) is moveable relative to the base (12);
wherein the slide (70) cannot be moved from the retracted position to the extended position until the cover (14) is in the closed position relative to the base (12), and wherein the key (26) cannot be removed from the lock (60) when the slide (70, 70A) is in the retracted position.

10. A method of using a lock (60) of an enclosure (10) of claims 1-8, the lock (60) including a slide (70, 70A) operated by a rotatable key (26) and moveable between an extended position and a retracted position;
wherein in the extended position the cover (14) is locked to the base (12), and wherein in the retracted position the cover (14) is moveable relative to the base (12);
wherein the slide (70, 70A) cannot be moved from the retracted position to the extended position until the cover (14) is in the closed position relative to the base (12), and wherein the key (26) cannot be removed from the lock (60) when the slide is in the retracted position;
rotating the key (26) to move the slide (70, 70A) to the retracted position; opening the cover (14) to access the interior (20);
closing the cover (14) after accessing the interior (20);
rotating the key (26) back to move the slide (70, 70A) to the extended position.

11. The method of claim 10, wherein a clip (94) latches the slide (70, 70A) in the retracted position, further comprising providing a latch (50) which is moveable relative to the cover (14), and moving the latch (50) to a closed position when the cover (14) is in the closed position, wherein the latch (50) latches the clip (94), enabling the key (26) to be rotated to move the slide (70, 70A) to the extended position.
